Europäisches Patentamt

European Patent Office

Office européen des brevets

(19)

(11) **EP 0 757 274 B1**

(12) **FASCICULE DE BREVET EUROPEEN**

(45) Date de publication et mention
de la délivrance du brevet:
**17.03.2004 Bulletin 2004/12**

(51) Int Cl.⁷: **G02B 27/28**

(21) Numéro de dépôt: **96401337.9**

(22) Date de dépôt: **19.06.1996**

(54) **Dispositif optique de polarisation et système de projection à valve à cristaux liquides utilisant un tel dispositif optique**

Optische Polarisationsvorrichtung und Flüssigkristall-Projektionssystem damit

Optical polarising device and liquid crystal projection system using such an optical device

(84) Etats contractants désignés:
**DE FR GB**

(30) Priorité: **21.06.1995 FR 9507396**

(43) Date de publication de la demande:
**05.02.1997 Bulletin 1997/06**

(73) Titulaire: **THOMSON multimedia**
**92648 Boulogne Cédex (FR)**

(72) Inventeurs:
• **Marcellin-Dibon, Eric**
**92050 Paris la Défense Cédex (FR)**
• **Drazic, Valter**
**92050 Paris la Défence Cédex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 460 241**     **EP-A- 0 535 876**
**DE-A- 3 537 369**     **US-A- 5 355 188**

• **PATENT ABSTRACTS OF JAPAN vol. 018, no.
267 (P-1741), 20 Mai 1994 & JP-A-06 043453
(CASIO COMPUT CO LTD), 18 Février 1994,**
• **PATENT ABSTRACTS OF JAPAN vol. 016, no.
252 (P-1367), 9 Juin 1992 & JP-A-04 058214
(MITSUBISHI RAYON CO LTD), 25 Février 1992,**

## Description

La présente invention concerne un dispositif optique de polarisation, plus particulièrement un dispositif permettant de modifier une lumière polarisée aléatoirement provenant d'une source lumineuse en une lumière polarisée linéairement ainsi qu'un système de projection du type à valve à cristaux liquides utilisant un tel dispositif optique.

Il est connu que les systèmes à cristaux liquides tels que les projecteurs utilisant un afficheur à cristaux liquides fonctionnant en valve optique ou les systèmes LCD à vision directe ont une faible transmission optique. En effet, ces systèmes doivent être éclairés par une lumière polarisée linéairement, ce qui nécessite l'utilisation de polariseur. Or, un polariseur absorbe plus de 50% de la lumière incidente. Pour remédier à cet inconvénient, on a proposé différents types de convertisseurs de polarisation.

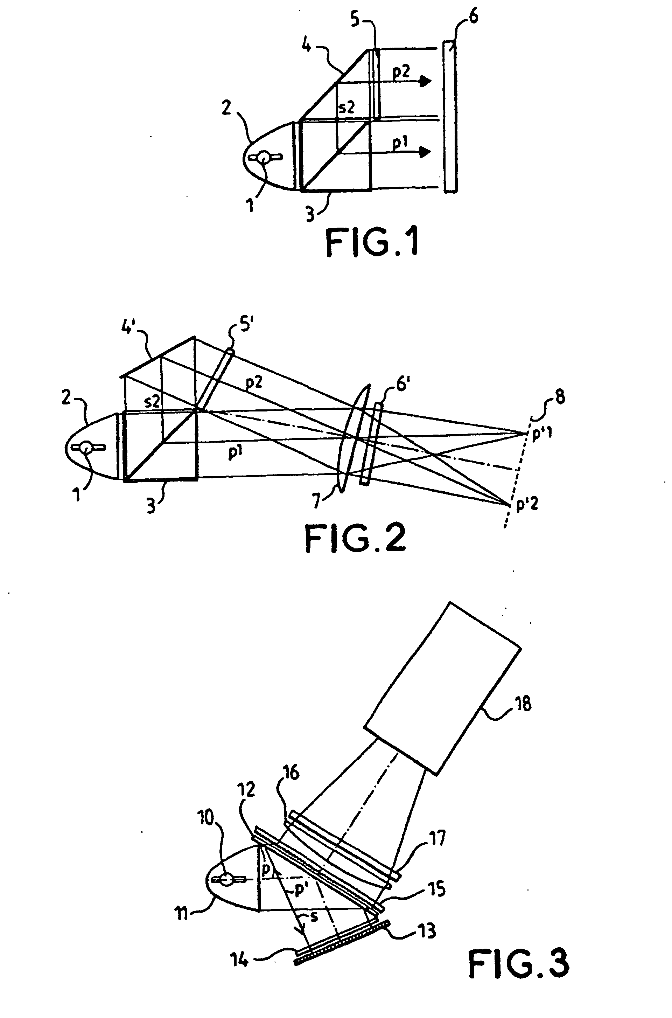

Ainsi, comme représenté sur la figure 1, un dispositif optique de polarisation de type classique est constitué d'une source lumineuse 1 qui peut être par exemple une lampe au tungstène, une lampe halogène, une lampe au xénon ou similaire. Cette lampe 1 est entourée en partie par un réflecteur elliptique ou parabolique 2. La lampe envoie un faisceau de lumière polarisée aléatoirement sur un séparateur de polarisation 3 de type classique qui transmet directement la composante de polarisation p du faisceau de lumière référencée p1 sur la figure et réfléchit la composante de polarisation s du faisceau de lumière référencée s2. Cette composante s2 passe à travers une plaque $\lambda/2$ 5, de manière à subir une rotation du plan de polarisation de 94°. On obtient donc avec ce système deux composantes de polarisation référencées, p1 et p2 qui éclairent la valve à cristaux liquides 6. Ces deux faisceaux parallèles p1, p2 ont pour principal inconvénient d'avoir des intensités différentes, ce qui donne un éclairement non uniforme de la valve à cristaux liquides.

Une autre solution évitant les deux faisceaux parallèles est de placer le miroir 4' et la plaque $\lambda/2$ 5' de telle sorte que les deux faisceaux p1 et p2 se superposent dans le plan de la valve à cristaux liquides 6'. Cette solution est représentée sur la figure 2 dans laquelle les éléments identiques à ceux de la figure 1 ont la même référence, ceux dont la position a été modifiée étant référencés avec « prime ». Les faisceaux p1 et p2 passent, de manière connue, dans une lentille de champ 7 avant d'arriver sur la valve 6'. Ils sont ensuite envoyés dans le plan de la pupille de la lentille de projection 8. Toutefois, comme les faisceaux p1 et p2 ont des angles d'incidence différents sur la lentille de champ, ils ne se focalisent pas au même endroit sur le plan de la pupille mais en deux endroits p'1 et p'2 comme représenté clairement sur la figure 2. Cela entraîne l'utilisation d'une lentille de projection présentant une ouverture importante, une telle lentille étant de coût élevé.

Pour remédier aux inconvénients ci-dessus, on a proposé, dans la demande de brevet Européen N° 0 422 661, un dispositif de polarisation optique comportant un séparateur de polarisation de type classique, un moyen de réflexion recevant la composante réfléchie par le séparateur de polarisation, la faisant tourner d'un plan de polarisation de 90° pour obtenir une composante réfléchie de polarité opposée et la renvoyant sur le séparateur de polarisation et un moyen de recombinaison des deux composantes constitué par des éléments diffractants. Toutefois, ce système présente encore des inconvénients, notamment au niveau de la dispersion angulaire du faisceau de sortie et de la nécessité d'un objectif de projection présentant une ouverture importante.

La présente invention a pour but de remédier aux inconvénients ci-dessus en proposant un nouveau dispositif optique de polarisation permettant une bonne recombinaison des faisceaux l'un sur l'autre et présentant une faible dispersion.

En conséquence, la présente invention a pour objet un dispositif optique de polarisation comportant :

- une source de lumière émettant un faisceau lumineux
- un séparateur de polarisation réfléchissant la composante de polarisation s du faisceau lumineux et transmettant la composante de polarisation p ;
- un moyen de réflexion recevant la composante réfléchie par le séparateur de polarisation, faisant tourner son plan de polarisation de 90° et renvoyant la composante réfléchie sur le séparateur de polarisation, et
- un moyen pour recombiner les deux composantes polarisées du faisceau lumineux constitué par une plaque de micro-prismes fonctionnant en réflexion totale, le moyen de réflexion étant constitué par une structure de Fresnel linéaire avec une surface réflective, associé à une plaque $\lambda/4$.

Selon une autre caractéristique de la présente invention, le séparateur de polarisation est constitué par un empilement d'au moins deux plaques de verre séparées par une couche d'air.

L'utilisation comme séparateur de polarisation d'un empilement air-verre donne un angle d'incidence sur le moyen de recombinaison correspondant à l'angle de Brewster et l'on s'est aperçu que l'ensemble formé d'un empilement air-verre et d'un moyen de recombinaison constitué par une plaque de microprismes fonctionnant en réflexion totale donne une anamorphose de 16/9 correspondant au format 16/9 des récepteurs de télévision alors qu'un séparateur de polarisation classique constitué par un prisme donne une anamorphose de 4/3 correspondant au format classique.

La présente invention a aussi pour objet un système de projection du type à valve à cristaux liquides comportant un dispositif optique de polarisation tel que décrit ci-dessus suivi d'une lentille de champ, d'une valve à cristaux liquides et d'une lentille de projection.

D'autres caractéristiques et avantages de la présente invention apparaîtront à la lecture de la description faite ci-après, cette description étant faite avec référence aux dessins ci-annexés dans lesquels :

- la figure 1, déjà décrite, représente schématiquement un premier dispositif optique de polarisation selon l'art antérieur ;
- la figure 2, déjà décrite, représente schématiquement un autre dispositif optique selon l'art antérieur ;
- la figure 3 est une vue schématique d'un dispositif optique de polarisation conforme à la présente invention ;
- la figure 4 est une vue en coupe agrandie du moyen de recombinaison conforme à la présente invention ;
- la figure 5 est une vue en coupe agrandie d'un moyen de recombinaison utilisé dans l'art antérieur ;
- les figures 6 et 7 sont des courbes montrant les avantages apportés par le moyen de recombinaison de la figure 4 par rapport au moyen de recombinaison de la figure 5, et plus particulièrement la figure 6 représente la dispersion des deux moyens lorsqu'ils sont éclairés par un faisceau collimaté avec un angle d'incidence correspondant à l'angle de Brewster et la figure 7 représente la fonction de transfert angulaire des deux systèmes pour un faisceau polarisé p ;
- la figure 8 est une vue schématique d'un dispositif optique de polarisation compact comportant une structure de Fresnel linéaire, réfléchissante selon un autre mode de réalisation de la présente invention
- la figure 9 est une vue agrandie d'une partie de la structure de Fresnel.

Sur la figure 3, on a représenté un système d'illumination de projecteur LCD complet. Ce système de projection au travers d'un écran à cristaux liquides comporte de manière connue une lampe 10 qui peut être une lampe à arc du type hallogènure métallique, à filament ou similaire. Cette lampe 10 est positionnée au foyer d'un réflecteur 11 de forme parabolique ou élliptique munie, de manière connue, d'un condenseur. La lumière émise par la lampe est une lumière blanche à polarisation aléatoire. Elle est réfléchie par le réflecteur et transmise sur un ensemble convertisseur de polarisation. Cet ensemble comporte un séparateur de polarisation 12 qui, dans le mode de réalisation représenté, est de préférence constitué par un empilement de plaques de verre de manière à former un empilement air-verre. Toutefois, et comme cela sera décrit ultérieurement, ce séparateur de polarisation peut être aussi un séparateur de type classique, tel qu'un prisme.

Le convertisseur de polarisation comporte aussi un miroir 13 dont le rôle est de réfléchir, vers le séparateur de polarisation les composantes s du faisceau lumineux. Ce miroir 13 est associé à une plaque 14 quart d'ondes qui fait tourner le plan de polarisation du faisceau réfléchi de 90°. En sortie du séparateur de polarisation, on trouve un moyen 15 de recombinaison des polarisations qui sera décrit de manière plus détaillée ci-après. Le faisceau issu de ce moyen est envoyé de manière connue sur une lentille de champ 16, puis sur un écran à cristaux liquides 17 ou modulateur électrooptique qui fonctionne en valve optique. L'image issue de l'écran à cristaux liquides est envoyée vers une lentille de projection 18.

Avec ce dispositif, le faisceau lumineux issu de la lampe 10 est envoyé sur le séparateur de polarisation 12. De manière connue, les composantes de polarisation p du faisceau passent directement à travers le séparateur de polarisation tandis que les composantes de polarisation s du faisceau sont réfléchies et envoyées vers le miroir 13 où elles subissent une réflexion totale et passent à nouveau à travers la lame quart-d'ondes de manière à ce que leur plan de polarisation soit tourné de 90°. La nouvelle composante référencée p' est alors envoyée sur le séparateur de polarisation 12. Les composantes p et p' ainsi transmises arrivent sur le moyen de recombinaison du faisceau qui, conformément à la présente invention, est constituée par un moyen de recombinaison à réflexion totale. Les composantes obtenues en sortie sont donc des composantes parallèles qui se superposent l'une à l'autre, comme cela sera expliqué ci-après.

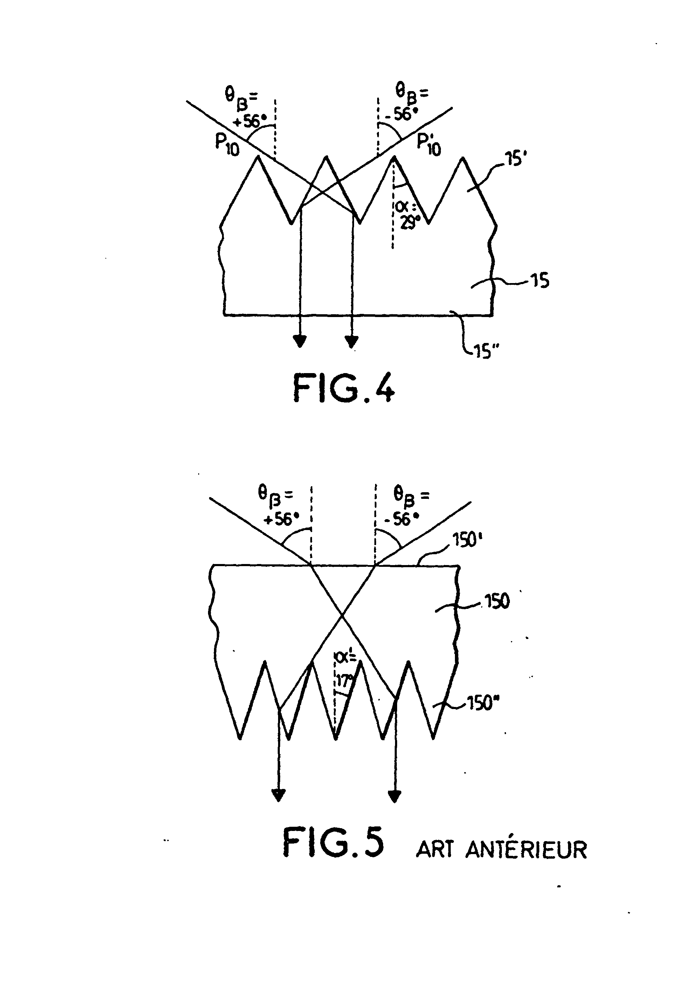

Sur la figure 4, on a donc représenté un moyen 15 de recombinaison des composantes de polarisation conforme à la présente invention. Ce moyen fonctionne en réflexion totale et il est constitué par une plaque transparente réalisée en un matériau tel que du méthacrylate, par exemple celui connu sous la marque "plexiglass" ou du polycarbonate ou d'autres matériaux similaires, le verre pouvant être aussi utilisé. Comme représenté clairement sur la figure 4, ce moyen comporte, sur sa face recevant le faisceau issu du séparateur de polarisation, un ensemble de microprismes 15' déposés en rangées parallèles. L'autre face est constituée par une face plane 15". Ainsi, comme représenté sur la figure 4, le faisceau incident frappe la surface extérieure inclinée du microprisme selon un angle presque perpendiculaire. Il est transmis à l'intérieur du microprisme et vient frapper la face interne de la surface adjacente sur laquelle il se réfléchit de manière à sortir perpendiculairement à la face 15". Ceci est représenté par le trajet suivi par les rayons p10 et p'10 sur la figure 4. Pour satisfaire à ces conditions, l'angle $\theta_\beta$ d'incidence et l'angle $\alpha$ que forme un côté du microprisme par rapport à une normale à la plaque 15" doivent satisfaire aux relations suivantes :

$$\cos (\alpha + \theta_\beta) = n \cos (3 \alpha)$$

$$(90° - \alpha) > \theta_{critique}$$

$$\text{avec } \theta_{critique} = \text{Arc sin } (1/n)$$

dans lesquelles $\theta_\beta$ représente l'angle d'incidence du faisceau lumineux issu du séparateur de polarisation par rapport à une perpendiculaire à la surface plane et n l'indice de réfraction de la plaque de microprismes.

Lorsque le séparateur de polarisation est constitué, comme mentionné ci-dessus, par un empilement air-verre, l'angle $\theta_\beta$ est égal à l'angle de Brewster, à savoir un angle de 56,6° pour le verre. Toutefois, on s'est aperçu que l'efficacité de la séparation de la polarisation restait élevée et variait peu pour des écarts de $\theta_\beta$ de l'ordre de $\pm 10°$. En fait, l'angle d'incidence, lorsque l'on utilise un séparateur de polarisation constitué par un empilement air-verre, est égal à l'angle de Brewster à plus ou moins quelques degrés, (à savoir deux ou trois degrés). Dans ce cas, comme représenté sur la figure 4, l'angle $\alpha$ est égal à 29°, si la plaque de microprismes est réalisée en "plexiglass" présentant un indice n = 1,49 pour une lumière de longueur d'ondes 587 nm. Si la plaque est réalisée en polycarbonate n = 1,58 et si elle est réalisée en verre n = 1,5168, ce qui modifie la valeur de $\alpha$ en conséquence, lorsque l'angle $\theta_\beta$ est égal à l'angle de Brewster.

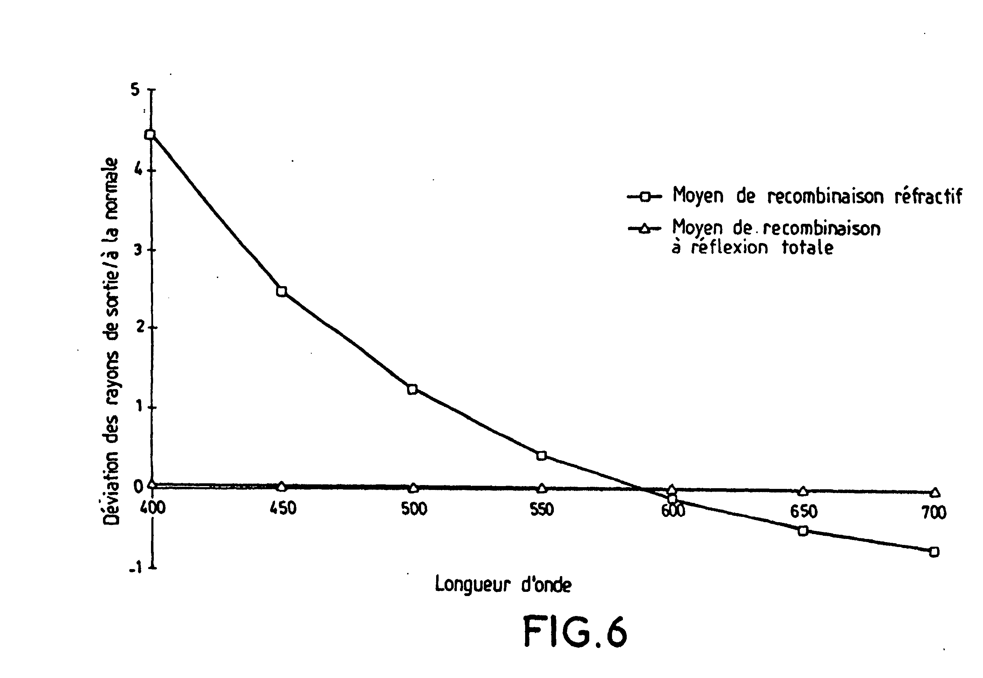

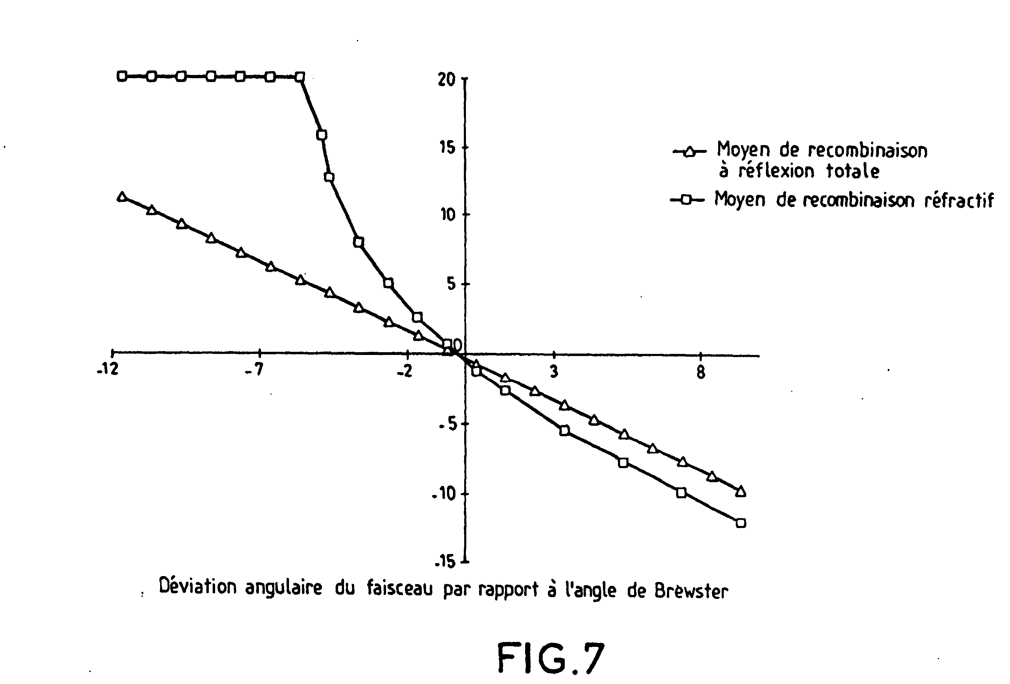

Pour montrer les avantages de la solution conforme à la présente invention par rapport à la solution de l'art antérieur décrite dans le brevet EP 0 422 661, on a représenté sur la figure 5 un moyen de recombinaison constitué par un élément réfractif. Ce moyen 150 est constitué par une plaque transparente dont la surface incidente 150' recevant les rayons issus du séparateur est une surface plane tandis que la surface émettant les deux rayons parallèles est une surface 150' constituée de microprismes. Dans ce cas, si l'angle d'incidence $\theta_\beta$ est choisi pour être l'angle de Brewster, l'angle $\alpha'$ des microprismes est égal à 17°. Les différences de résultats obtenues entre la solution conforme à la présente invention et cette solution de l'art antérieur dans laquelle on a choisi, comme séparateur de polarisation, un séparateur constitué par un empilement air-verre, sont données par les courbes des figures 6 et 7. La courbe de la figure 6 représente la dispersion due aux moyens de recombinaison lorsque ceux-ci sont éclairés par un faisceau collimaté selon l'angle de Brewster. Dans ce cas, on voit que la déviation des rayons de sortie par rapport à la normale, en fonction de la longueur d'ondes, est beaucoup plus importante avec le système de l'art antérieur qu'avec le système conforme à la présente invention avec lequel il n'y a aucune déviation. De même, en examinant la figure 7, qui représente la fonction de transfert angulaire pour un faisceau polarisé p des deux moyens de recombinaison, on observe un élargissement du faisceau de sortie par rapport à la normale en fonction de la déviation angulaire du faisceau par rapport à l'angle de Brewster beaucoup plus importante avec le système de l'art antérieur qu'avec le système de la présente invention qui donne un résultat sensiblement linéaire.

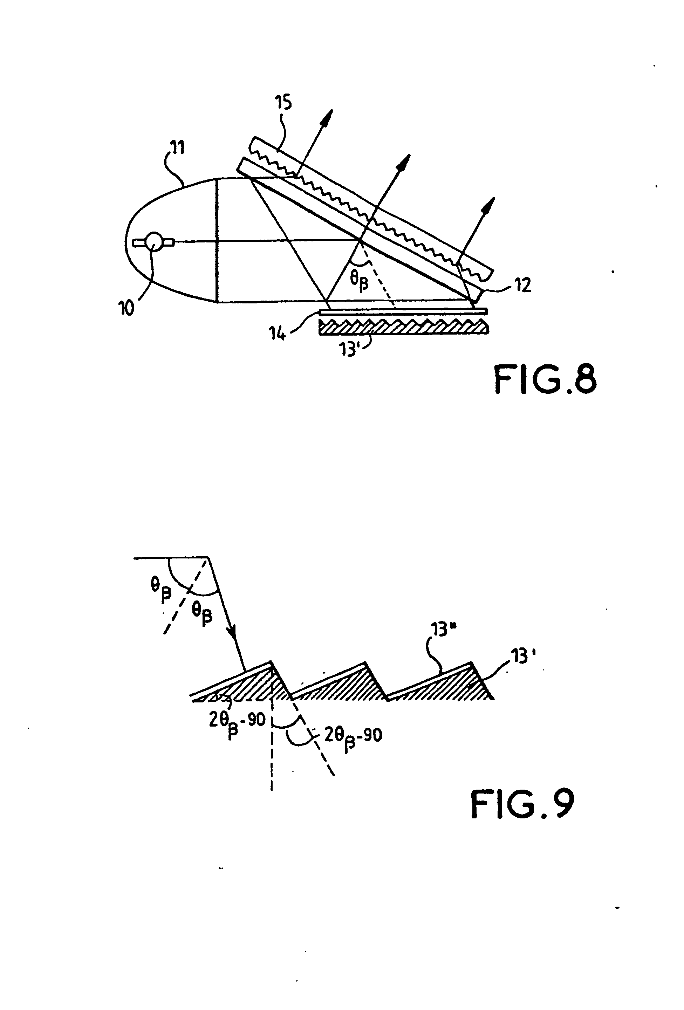

On décrira maintenant avec référence aux figures 8 et 9 d'autres perfectionnements qui peuvent être apportés au dispositif optique de polarisation de la présente invention. Ainsi, comme représenté sur la figure 8, pour obtenir un système encore plus compact, on peut remplacer le miroir plan 13 de la figure 3 par un système de Fresnel 13' de type réflectif. Dans ce cas, et comme représenté sur la figure 9, l'angle $\beta$ que fait la structure de Fresnel par rapport à sa structure de base est égal à $2\theta_\beta - 90°$. Cette structure de Fresnel linéaire est recouverte d'une couche réflectrice 13" de manière connue pour renvoyer le faisceau vers la plaque quart d'ondes.

Les autres éléments de la figure 8 sont identiques à ceux décrits avec référence à la figure 4 et portent de ce fait les mêmes références.

D'autre part, dans le cadre de la présente invention, on peut utiliser comme lentille de champ, une lentille telle que décrite dans la demande de brevet français N°95 04477 au nom de la Demanderesse, à savoir une lentille formée par un ensemble de surfaces élémentaires à chacune desquelles est associée une fonction correspondant chacune à un point à éclairer de l'axe et à un angle que fait le plan médian passant par le point à éclairer avec le plan horizontal, l'inclinaison de l'ensemble des surfaces élémentaires étant obtenue en interpolant ces fonctions avec une fonction spécifique qui est un polynome. Une telle lentille est connue sous le terme de lentille à surface libre ou "Free form".

L'ensemble du système décrit ci-dessus présente de nombreux avantages, notamment l'ouverture de l'objectif de projection peut être limitée par rapport au système de l'art antérieur, ce qui permet d'obtenir un système beaucoup moins onéreux avec en plus une bonne recombinaison des deux faisceaux polarisés limitant de ce fait les pertes d'intensité lumineuses.

## Revendications

1.  Dispositif optique de polarisation comportant

    - une source (11) de lumière émettant un faisceau lumineux ;
    - un séparateur (12) de polarisation réfléchissant la composante de polarisation s du faisceau lumineux et transmettant la composante de polarisation p ;
    - un moyen de réflexion (13', 14) recevant la composante réfléchie par le séparateur de polarisation, faisant tourner le plan de polarisation de 90° et renvoyant la composante réfléchie sur le séparateur de polarisation, et
    - un moyen (15) pour recombiner les deux composantes polarisées du faisceau lumineux de manière à obtenir un faisceau collimaté,

**caractérisé en ce que** le moyen de réflexion (13',14) est constitué par une structure de Fresnel linéaire recouverte avec une surface réflective (13') associée à une plaque λ/4(14).

2. Dispositif selon la revendication 1, **caractérisé en ce que** la surface réflective est constituée par une couche réflectrice recouvrant la structure de Fresnel.

3. Dispositif selon l'une quelconque des revendications 1 et 2, **caractérisé en ce que** l'angle β que fait la surface réfléchissante de la structure de Fresnel par rapport à sa base est égal à $2\theta_\beta - 90°$..

4. Dispositif selon l'une quelconque des revendications 1 à 3, **caractérisé en ce que** le séparateur de polarisation est constitué par un empilement d'au moins deux plaques de verre séparées par une couche d'air.

5. Dispositif selon la revendication 4, **caractérisé en ce que** le séparateur de polarisation est constitué par un empilement de couches et est positionné de sorte que sa surface recevant le faisceau lumineux fasse un angle de 45° par rapport audit faisceau lumineux.

6. Système de projection du type à afficheur à cristal liquide, **caractérisé en ce qu'**il comporte un dispositif optique de polarisation selon l'une quelconque des revendications 1 à 5, une lentille de champ, une valve à cristaux liquides et une lentille de projection.

7. Système selon la revendication 6, **caractérisé en ce que** la lentille de champ est une lentille à surface libre.

**Patentansprüche**

1. Optische Potarisationsvorrichtung mit

- einer Lichtquelle (11) zur Emittierung eines Lichtstrahls,
- einem Poiarisationstrenner (12) zur Reflexion der Polarisationskomponente s des Lichtstrahls und zur Übertragung der Polarisationskomponente p,
- Reflexionsmitteln (13', 14) zum Empfang der durch den Polarisationstrenner reflektierten Komponente, Drehung der Polarisationsebene um 90° und Rücksendung der auf dem Polarisationstrenner reflektierten Komponente und
- Mitteln (15) zur Rekombination der beiden polarisierten Komponenten des Lichtstrahls derart, dass ein parallel gerichteter Strahl entsteht,

**dadurch gekennzeichnet, dass** die Reflexionsmittel (13', 14) durch einen linearen Fresnelaufbau gebildet sind, der mit einer Reflexionsoberfläche 13' für eine λ/4-Platte (14) bedeckt ist.

2. Vorrichtung nach Anspruch 1, **dadurch gekennzeichnet, dass** die Reflexionsoberfläche durch eine den Fresnelaufbau bedeckende Reflexionsschicht gebildet ist.

3. Vorrichtung nach einem der Ansprüche 1 und 2 **dadurch gekennzeichnet, dass** der Winkel β, den die reflektierende Oberfläche des Fresnelaufbaus zu seiner Basis bildet, gleich $2\theta_\beta - 90°$ ist.

4. Vorrichtung nach einem der Ansprüche 1 bis 3, **dadurch gekennzeichnet, dass** der Polarisationstrenner durch einen Stapel von wenigstens zwei Glasplatten gebildet ist, die durch eine Luftschicht voneinander getrennt sind.

5. Vorrichtung nach Anspruch 4, **dadurch gekennzeichnet, dass** der Polarisationstrenner aus einem Stapel von Schichten gebildet und derart positioniert ist, dass die den Lichtstrahl empfangende Oberfläche einen Winkel von 45° zu dem Lichtstrahl bildet.

6. Projektionssystem vom Typ mit einer Flüssigkristall-Wiedergabeeinheit, **gekennzeichnet durch** eine optische Polarisationsvorrichtung nach einem der Ansprüche 1 bis 5, eine Feldlinse, eine Flüssigkristallröhre und eine Projektionslinse.

7. System nach Anspruch 6, **dadurch gekennzeichnet, dass** die Feldlinse eine Linse mit freier Oberfläche ist.

**Claims**

1. Optical polarization device including:

a source (11) of light emitting a light beam; a polarization beam splitter (12) for reflecting the s-polarization component of the light beam and transmitting the p-polarization component ; means of reflection (13', 14) for receiving the component reflected by said polarization beam splitter, rotating its plane of polarization through 90° then returning it to said polarization beam splitter, and means (15) of recombination of the two polarization components of the light beam so as to obtain a collimated beam, **characterized in that** the means of reflection (13', 14) is constituted by a linear Fresnel structure covered with a reflective surface (13') associated with a quarter-wave plate $\lambda/4$.

2. Device according to claim 1, **characterized in that** the reflective surface is constituted by a reflective layer coating the Fresnel structure.

3. Device according to any of claims 1 and 2, **characterized in that** the angle $\beta$ made by said reflective surface said Fresnel structure relative to its base surface is equal to $2\theta_\beta - 90°$.

4. Device according to any one of claims 1 to 3, **characterized in that** the polarization beam splitter is constituted by a stack of at least two transparent plates separated by a layer of air.

5. Device according to claim 4, **characterized in that** the polarization beam splitter is constituted by a stack of layers and is positioned in order that its face receiving the light beam makes an angle of 45° with respect to the said light beam.

6. Projection system of the liquid crystal display type, **characterized in that** it comprises an optical polarization device according to any of claims 1 to 5, a field lens, a liquid crystal valve and a projection lens.

7. System according to claim 6, **characterized in that** the field lens is a free form lens.

FIG.1

FIG.2

FIG.3

EP 0 757 274 B1

$\theta_B = +56°$  $\theta_B = -56°$

$P_{10}$  $P'_{10}$

15'

$\alpha = 29°$

15

15''

# FIG.4

$\theta_\beta = +56°$  $\theta_B = -56°$

150'

150

$\alpha' = 17°$

150''

# FIG.5  ART ANTÉRIEUR

8

FIG.6

légende:
—△— Moyen de recombinaison à réflexion totale
—□— Moyen de recombinaison réfractif

Déviation angulaire du faisceau par rapport à l'angle de Brewster

FIG.7

EP 0 757 274 B1

FIG.8

FIG.9